# EUROPEAN PATENT SPECIFICATION

(11) **EP 1 600 315 B1**
(45) Date of publication and mention of the grant of the patent: **05.03.2008**
(21) Application number: 05010781.2
(22) Date of filing: 18.05.2005
(51) Int. Cl.: B60H 1/00, H04L 12/46

(54) **In-vehicle network control system**
Steuerungssystem für ein Netzwerk in einem Fahrzeug
Système de commande pour un réseau d'un véhicule

(30) Priority: 28.05.2004 JP 2004158993
(43) Date of publication of application: 30.11.2005
(73) Proprietor: Calsonic Kansei Corporation, Tokyo (JP)
(72) Inventor: Sunaga, Hideki c/o CALSONIC KANSEI CORPORATION, Nakano-ku, Tokyo (JP); Hojo, Shuji c/o CALSONIC KANSEI CORPORATION, Nakano-ku, Tokyo (JP); Tanaka, Kaoru c/o CALSONIC KANSEI CORPORATION, Nakano-ku, Tokyo (JP)
(74) Representative: Grünecker, Kinkeldey, Stockmair & Schwanhäusser Anwaltssozietät

(56) References cited:
- EP-A- 1 158 718
- DE-A1- 10 229 575
- US-B1- 6 736 327
- PATENT ABSTRACTS OF JAPAN vol. 2003, no. 03, 5 May 2003 (2003-05-05) -& JP 2002 325085 A (MITSUBISHI ELECTRIC CORP), 8 November 2002 (2002-11-08)

## Description

### BACKGROUND OF THE INVENTION

### Field of the Invention

The present invention relates to a control system of an in-vehicle device such as an air-conditioning device for a vehicle and a master apparatus of an in-vehicle network, and more particularly, to an in-vehicle device control system and a master apparatus of the in-vehicle network configured to carry out communication between a main controller (master apparatus) and an actuator unit (slave device) with LIN (Local Interconnect Network) protocol or the like and adapted to stop the communication when voltage of a battery power source is out of a predetermined range of voltage.

### Description of the Related Art

Heretofore, there has been known an air-conditioning system for a vehicle that drives and controls a plurality of door actuators, wherein a LAN (Local Area Network) structure is employed for connection between an air-conditioning amplifier unit as a main controller and respective door actuators (for reference, see JP-A H10-147133, JP-A H10-138742, JP-A H10-138738 and JP-A H10-129241).

Also, there has been known an air-conditioning system for the vehicle in which LIN protocol is utilized as an in-vehicle network (for reference, see JP-A 2002-325085).

A master-slave type communication is established in LIN through a single-wire bus which is pulled up to a battery power source. The bus (LIN bus) is connected with one master and a maximum of 15 slaves. A bus-level of the LIN is defined in compliance with ISO 9141 standard. Threshold levels are set in receiving sides of the communication wherein 60% of a voltage level of a battery power source voltage VBAT is defined as a bit 1 (recessive) and 40% of the voltage level thereof is defined as a bit 0 (dominant).

A voltage of the battery power source fluctuates depending upon states of charge and its load. Accordingly, when the voltage of the battery power source is fluctuated (descent or elevation) out of a predetermined range (for example, 9-18 volts or 7.3-18 volts), there is a possibility of causing shifted setting of the threshold levels or causing an abnormal operation in a voltage comparing circuit or the like. Hence, judgment of a logic level of the bit will not be carried out properly and a communication error may occur thereby.

Even if the communication error has not occurred, there is still a possibility that an operation of the actuator may not be carried out properly due to the lowered voltage, or an overcurrent may be generated due to increased voltage, when the voltage of the battery power source is fluctuated (decent or elevation) out of the predetermined range. An in-vehicle device control system according to the preamble of claim 1 and a master apparatus of an in-vehicle network according to the preamble of claim 4 is known from EP-A-1 158 718. This document discloses an on-board vehicle network and a method for operating the network, which permits an Electronic Control Unit (ECU) to activate the other ECUs used for a particular vehicle control task. The network comprises a plurality of on-board vehicle ECUs connected together via at least one network bus, with the network being arranged into a plurality of virtual net works, that each comprise a group of ECUs that together perform a vehicle control task. The ECU puts the members of Virtual Network into a low voltage tolerant mode when the low-voltage condition is imminent, to prevent erroneous serial data communication.

### SUMMARY OF THE INVENTION

It is the object of the present invention to provide an in-vehicle device control system and a master apparatus of an in-vehicle network capable of obviating generation of a communication error and an abnormal operation of a slave.

This object is solved by the features of claims 1 and 4, respectively.

Further embodiments are laid down in the subclaims.

The in-vehicle device control system according to the invention comprises a main controller; and at least one actuator unit, the main controller is adapted to carry out bidirectional serial data communication with the at least one actuator unit through a bus which is pulled up to a battery power source, the serial data communication is carried out to operate the at least one actuator unit by supplying an operation command from the main controller to the at least one actuator unit and to supply various information from the at least one actuator unit to the main controller, wherein the main controller comprises a voltage monitor for monitoring a voltage of the battery power source, and a communication permitting unit for permitting transmission of communication data between the main controller and the at least one actuator unit when the voltage of the battery power source is in a predetermined range of voltage and for prohibiting the transmission of data communication when the battery power source voltage is out of the predetermined range of voltage.

Following are preferred embodiments (1) to (2) of the in-vehicle device control system according to the present invention. Any combinations thereof are considered to be preferred ones of the present invention unless any contradictions occur.

(1) The serial data communication between the main controller and the at least one actuator unit utilizes a local interconnect network

(2) The main controller controls entire operation of an air-conditioning device for an automobile, and the at least one actuator unit comprises a plurality of actuator units adapted to rotate doors provided in the air-conditioning device for the automobile, respectively.

The present invention also provides a master apparatus of an in-vehicle network. The master apparatus of an in-vehicle network is configured to carry out serial data communication with a slave device through a bus which is pulled up to a battery power source via a pull-up resistor, wherein the master apparatus comprises a voltage monitor for monitoring a voltage of the battery power source, and communication permitting unit for permitting transmission of communication data between the master apparatus and the slave device when the voltage of the battery power source is in a predetermined range of voltage and for prohibiting the transmission of data communication when the battery power source voltage is out of the predetermined range of voltage.
Following are preferred embodiments (1) to (2) of the master apparatus of the in-vehicle network according to the present invention.
Any combinations thereof are considered to be preferred ones of the present invention unless any contradictions occur.

(1) The serial data communication between the master apparatus and the slave device utilizes a local interconnect network.

(2) The master apparatus controls entire operation of an air-conditioning device for an automobile, and the slave device rotates a door provided in the air-conditioning device for the automobile.

According to the in-vehicle device control system and the master apparatus of the in-vehicle network of the present invention, the data communication is carried out when the voltage of the battery power source is in the predetermined range of voltage, and the data communication is not carried out when the voltage of the battery power source is out of the predetermined range of voltage. Therefore, it is possible to obviate generation of the communication error and the abnormal operation of slaves due to fluctuation (decent or elevation) of the voltage of the battery power source and the voltage of the battery power source is deviated from the predetermined range (for example, 9 to 18 volts or 7.3 to 18 volts).

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram schematically showing an entire structure of an air-conditioning device for an automobile (car air-conditioner) to which an in-vehicle device control system according to the present invention is applied.

FIG. 2 is a diagram showing a structure of a communication system of the air-conditioning device for the automobile (car air-conditioner).

FIG. 3 is a diagram showing a data structure of 1 frame of a LIN communication standard.

FIGS. 4A to 4F are diagrams showing data structures of respective fields within the 1 frame of the LIN communication standard.

FIG. 5 is a diagram showing one example of content of a data 1 field in a receiving-operation mode.

FIG. 6 is a diagram showing one example of content of a data 2 field in the receiving-operation mode.

FIG. 7 is diagram showing one example of content of the data 1 field in a sending-operation mode.

FIG. 8 is a diagram showing one example of content of the data 2 field in the sending-operation mode.

FIG. 9 is a block diagram showing a structure of an actuator unit.

FIG. 10 is a diagram showing one concrete example of a logic-circuit portion included in a motor controlling IC constructing a motor controlling circuit.

FIG. 11 is a diagram showing an example of switching electric power supplied to an electric motor in 16 steps by PWM control.

FIG. 12 is a diagram showing one example of a PWM-data map for a soft start at the time of activation of the motor.

FIG. 13 is a diagram showing one example of a PWM-data map for a soft stop.

FIGS. 14A and 14B are graphs showing characteristics of changes in a duty ratio from the activation of the motor to stopping of the motor when soft start/soft stop control is carried out.

FIG. 15 is a diagram showing a structure of an H-bridge circuit portion.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

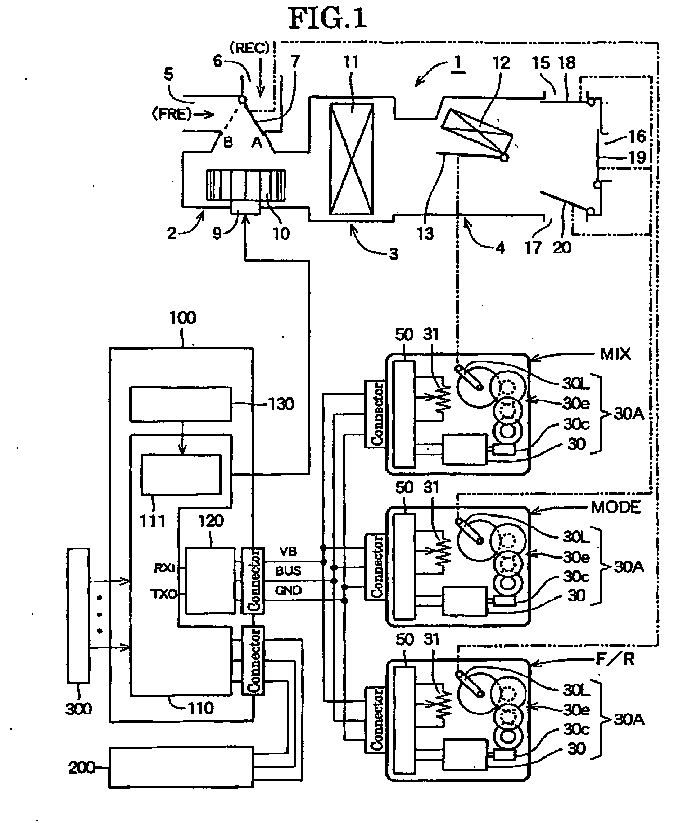

FIG. 1 is a diagram schematically showing an entire structure of an air-conditioning device for an automobile (car air-conditioner) to which an in-vehicle device control system according to the present invention is applied. The air-conditioning device for the automobile comprises an air-conditioning device body 1, a mix door-actuator unit MIX, a mode door-actuator unit MODE, an intake door-actuator unit F/R, a main controller 100, and an operation/display panel 200. Note that, it is intended the wording of "door" is used to comprise a term "valve" or its equivalents.

The air-conditioning device body 1 comprises an intake unit 2 for selectively taking in fresh air or re-circulating air, a cooling unit 3 for cooling taken-in air, and a heater unit 4 for blending and heating the taken-in air and blowing blended air to a vehicle-interior thereafter.

The intake unit 2 is provided with a fresh air-inlet 5 and a re-circulating air-inlet 6. An intake door 7 for adjusting proportion of the fresh air and the re-circulating air to be taken into the unit is rotatably provided at a portion where the inlets 5 and 6 are connected. The intake door 7 is rotated by the intake door-actuator unit F/R.

The intake unit 2 includes a fan (blower-fan) 10 which is rotated by a fan-motor 9. The fresh air or the re-circulating air is selectively sucked in by rotation of the fan 10 from the fresh air-inlet 5 or the re-circulating air-inlet 6 according to a position of the intake door 7, and also, voltage applied to the fan-motor 9 is varied to change the rotational speed of the fan 10, thereby an amount of wind blown to the vehicle-interior is adjusted. In addition, rotation of the fan-motor 9 is controlled by an air-conditioner controller 110 included in the main controller 100. The fresh air is introduced (FRE) when the intake door 7 is at an "A" position shown in FIG. 1, whereas the re-circulating air is circulated (REC) when the intake door 7 is at a "B" position shown in the same.

An evaporator 11 constructing a refrigeration cycle is provided in the cooling unit 3. A refrigerant is supplied to the evaporator 11 when a compressor which is not shown is operated, and thereby the taken-in air is cooled by a heat exchange with the refrigerant.

A heater core 12 in which engine-cooling water is circulated is provided in the heater unit 4. A mix door 13 for adjusting proportion of an amount of air which passes through the heater core 12 and an amount of air which detours the heater core 12 is rotatably provided above the heater core 12. The mix door 13 is rotated by the mix door-actuator unit MIX. A rate of blending of the heated wind which has passed through the heater core 12 and which is heated by a heat exchange with the engine-cooling water, and the cooled wind which has detoured around the heater core 12 and which is thus not heated by the heater core, is varied by changing a degree of opening of the mix door 13, thereby a temperature of air blown to the vehicle interior is adjusted.

The temperature-adjusted air is supplied to the vehicle interior from one of a defrosting-blowout hole 15, a vent blowout hole 16 and a foot blowout hole 17. A defrosting door 18, a vent door 19 and a foot door 20 are rotatably provided to the defrosting-blowout hole 15, the vent blowout hole 16 and the foot blowout hole 17, respectively. The defrosting door 18, the vent door 19 and foot door 20 (hereinafter these are collectively called as mode doors) are rotated by the mode door-actuator units MODE. A blowout mode is arbitrary set by combining opened-closed states of each of the blowout holes 15-17. Note that only one mode door-actuator unit is shown in FIG. 1 for convenience of illustration, and illustrations of other two are omitted.

Each of the actuator units MIX, MODE and F/R comprise an electric motor type actuator 30A, a potentiometer 31 in which a value of resistance is changed in conjunction with rotation of an actuator lever 30L, and a motor controlling circuit 50 structured by an exclusively-used IC (custom IC), which are combined and disposed in a case (chassis).

The electric motor type actuator 30A is provided with an electric motor 30, a worm gear 30c attached to an output shaft of the electric motor 30, a reduction gear-array mechanism 30e engaged with the worm gear 30c, and the actuator lever 30L rotated via the worm gear 30c and the reduction gear-array mechanism 30e.

By transmitting the rotation of the actuator lever 30L to, for example, the intake door 7 via a link mechanism which is not shown, the intake door 7 is rotated. Voltage which corresponds to a rotational position of the door (actual opening degree of door) is outputted from the potentiometer 31.

Each of the actuator units MIX, MODE and F/R has three-terminal connectors. A three-core cable comprising a battery power source line (VB), a ground line (GND) and a data line (BUS) connects each of the actuator units MIX, MODE and F/R with the main controller 100.

The operation/display panel 200 comprises various kinds of operating switches and various indicators. The operation/display panel 200 and the main controller 100 are connected to each other with a three-core cable. Accordingly, such a structure is employed in which power source is supplied from the main controller 100 to the operation/display panel 200 and a serial data communication is carried out between the main controller 100 and the operation/display panel 200. When the operating switches or the like arc operated, information inputted by the operation of the operation/display panel 200 is supplied to the main controller 100. The operation/display panel 200 displays an operational state or the like on the various indicators based on a display command supplied from the main controller 100.

The main controller 100 comprises an air-conditioner controller 110 which is structured by utilizing a micro computer system, a LIN input/output circuit 120, and a battery power source voltage monitoring means (voltage monitor) 130 for monitoring whether or not a power source voltage of a not-shown battery mounted in a vehicle is in a predetermined range of voltage. The air-conditioner controller 110 comprises a communication permitting means (communication permitting unit) 111 which permits transmission of communication data when voltage of the battery power source is in the predetermined range of voltage.

The air-conditioner controller 110 controls operation of the air-conditioning device based on an input of the operation of the operation/display panel 200 and an input from various sensors 300 (for example, water temperature sensor, refrigerant temperature sensor, inside-air temperature sensor, outside-air temperature sensor, solar radiation sensor and intake temperature sensor). The air-conditioner controller 110 also displays the operational state or the like on the various indicators provided on the operation/display panel 200.

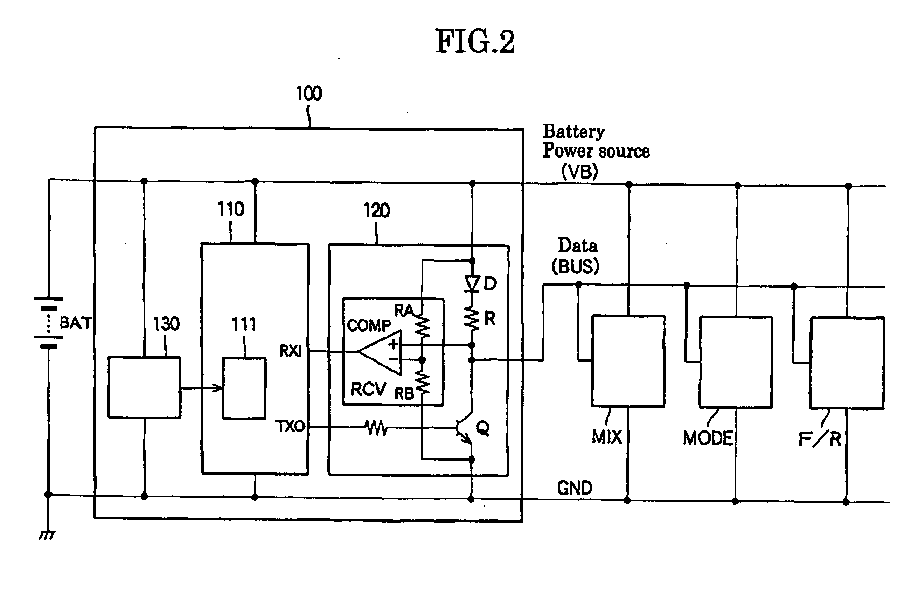

FIG. 2 is a diagram showing a structure of a communication system according to the embodiment of the present invention. As shown in FIG. 2, the battery power source (VB) is supplied to each of the actuator units MIX, MODE and F/R from the main controller 100. The bidirectional serial data communication in an asynchronous type is carried out via the data line (BUS) between the main controller 100 and each of the actuator units MIX, MODE and F/R. A communication protocol complies with LIN (Local Interconnect Network).

The data line (BUS) is pulled up through a pull-up resistor (for example, one kilo ohm) R and a backflow prevention diode D which are provided in the LIN input/output circuit (LIN transceiver) 120 of the main controller 100 to the battery power source (VB). Sending of data is performed by switching a NPN grounded-emitter transistor Q based on send-data signals outputted from a send-data output terminal TXO of the air conditioner controller 110. Reception of data is performed by making a binary decision on voltage in the data line (BUS) by a bus level judging circuit RCV based on a predetermined threshold value of voltage. The bus level judging circuit RCV includes a voltage comparator COMP which compares a voltage level of the data line (BUS) with voltage in which the voltage of the battery power source (VB) is divided by respective resistors RA and RB. The bus level judging circuit RCV judges as a bit 1 (recessive) when the voltage level of the data line (BUS) is over 60% of the battery power source voltage (VBAT), and judges as a bit 0 (dominant) when the voltage level of the data line (BUS) is less than 40% of the battery power source voltage (VBAT).

The serial data communication is carried out by defining that the main controller 100 is a "master", and defining that each of the actuator units MIX, MODE, and F/R are "slaves". Identification (ID) codes (addresses) which are different from each other are respectively allocated to each of the actuator units MIX, MODE, and F/R. The LIN input/output circuits are respectively provided in each of the actuator units MIX, MODE, and F/R which are the slaves. A value of pull-up resistor of the slave is, for example but not limited to, a few ten kilo-ohms (for example, 20·47 kilo-ohms).

The air conditioner controller 110 controls the operation of each of the actuator units MIX, MODE, and F/R by sending command data such as target value-data of door opening degree to each of the actuator units MIX, MODE, and F/R. The air conditioner controller 110 also requests each of the actuator units MIX, MODE, and F/R to send information regarding the operational state or the like thereof, and receive such information to monitor and conduct a diagnosis and so on of the operational states of each of the actuator units MIX, MODE, and F/R.

The main controller 100 as the master comprises the battery power source voltage monitoring means 130 for monitoring whether or not the battery power source voltage (VBAT) is in the predetermined range of voltage (for example but not limited to, 9-18 volts or 7.3-18 volts), and the communication permitting means 111 which performs control to permit the data communication to be carried out when the battery power source voltage VBAT is in the predetermined range of voltage and performs control such that the data communication is not carried out when the battery power source voltage VBAT is out of the predetermined range of voltage. Therefore, since the transmission of the communication data is not carried out in a state of overvoltage in which the battery power source voltage VBAT exceeds 18 volts for example and in a state of lowered voltage in which the battery power source voltage VBAT is lower than 7.3 volts for example, a reception error will not occur.

According to one embodiment of the present invention, the battery power source voltage monitoring means 130 may be configured to detect that the battery power source voltage exceeds an allowable upper limit voltage and that the battery power source voltage is lower than an allowable lower limit voltage, respectively, by using two sets of voltage comparing circuits. According to one embodiment of the present invention, the battery power source voltage monitoring means 130 may be configured to convert voltage obtained by resistively dividing the battery voltage into battery power source voltage data through an AID converter, to judge whether or not the battery power source voltage VBAT is in the predetermined range of voltage, based on the battery power source voltage data.

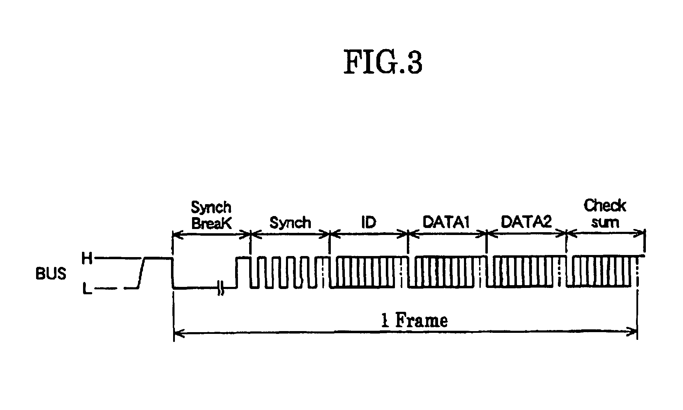

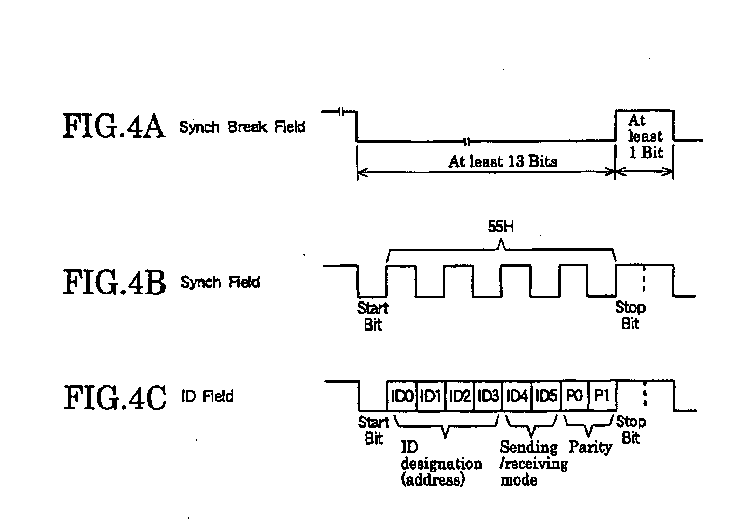

FIG. 3 is a diagram showing a data structure of 1 frame of a LIN communication standard, and FIGS. 4A to 4F are diagrams showing data structures of respective fields within the 1 frame of the LIN communication standard. As shown in FIG. 3, 1 frame of the LIN communication standard is structured by a synch-break field (Synch Break), a synch field (Synch), an ID field (ID), a data one field (DATA 1), a data 2 field (DATA 2), and a checksum field (Checksum).

As shown in FIG. 4A, the synch-break field is configured to be a "H" level during at least one bit period after a "L" level has continued during at least 13-bit period. The synch-break field is for taking frame synchronization.

As shown in FIG. 4B, the synch field is structured by a start bit, "55" H-data if it is represented in a hexadecimal form as bit-synchronization signals (a symbol "H" indicates the hexadecimal form), and a stop bit having at least one bit period. The synch field is used for taking bit synchronization. The slaves measure time of the synch field and calculate one bit time by dividing a result of the measurement of time by 8, to adjust a baud rate.

As shown in FIG. 4C, the ID field is structured by a start bit, 4 bits of identification (ID) codes (ID0-ID3) for selecting and designating a recipient of the communication, 2 bits of receiving/sending requests (ID4, ID5) for setting sending/receiving modes of the slaves, 2 bits of parity check data (P0, P1), and at least 1 bit period of a stop bit.

One of the door actuator units MIX, MODE and F/R is designated by the ID field, and at the same time, an operation mode after tho DATA 1 field is designated. More specifically, it is designated by the data 1 field and the data 2 field whether the actuator unit MIX, MODE or F/R as the slave becomes a receiving-operation mode for receiving the various commands from the main controller 100 as the master, or a sending-operation mode for sending the operational state or the like of the actuator unit MIX, MODE or F/R to the main controller 100.

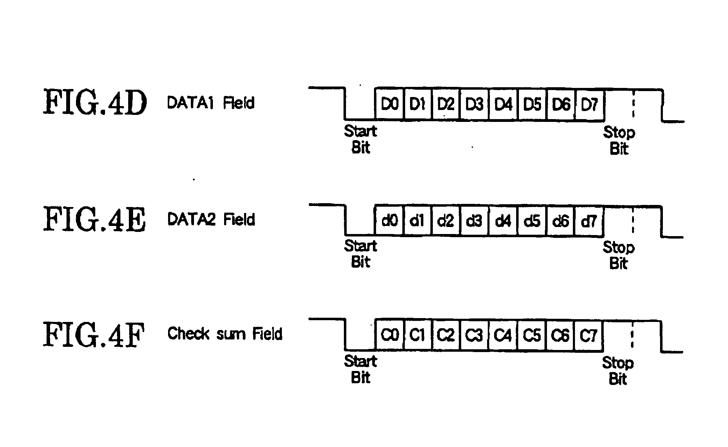

As shown in FIG. 4D, the data 1 field is structured by a start bit, 8 bits of data (D0-D7), and at least 1 bit period of a stop bit. When the receiving-request is designated in the ID field, the main controller 100 supplies opening degree of door-designating data (target value-data) to the actuator unit MIX, MODE or F/R by using the data 1 field. When the sending-request is designated in the ID field, the actuator unit MIX, MODE or F/R sends data on present opening degree of door (present position data) in the data 1 field.

As shown in FIG. 4E, the data 2 field is structured by a start bit, 8 bits of data (d0-d7), and at least 1 bit period of a stop bit. When the receiving-request is designated in the ID field, the main controller 100 supplies various commands to the actuator units MIX, MODE and F/R by using the data 2 field. The various commands includes, for example but not limited to, a request for clearing flag of communication error, a request for clearing diagnosis flag, a request for setting operational condition when motor activates/stops (a request for soft start/soft stop control and a request for setting time of soft start), a request for emergency stop of motor, and a request for forced operation of motor.

When the sending-request is designated in the ID field, the actuator units MIX, MODE and F/R supply information regarding the operational state and error detection by the data 2 field. The information regarding the operational state and the error detection includes, for example but not limited to, an overcurrent detection flag, a motor-currently stopped-flag, a motor-normal rotation flag, a motor-reverse rotation flag, a received ID parity error-flag, an over-temperature-detection flag, a received sum check error-flag, and an overvoltage-detection flag.

As shown in FIG. 4F, the checksum field is structured by a start bit, 8 bits of data (C0-C7), and at least 1 bit of period of a stop bit. According to one embodiment of the present invention, 8 bits of inverted data which is a result of having added data in the data 1 field and the data in the data 2 field, and further added thereto carry-data of the added result, are transmitted as checksum data.

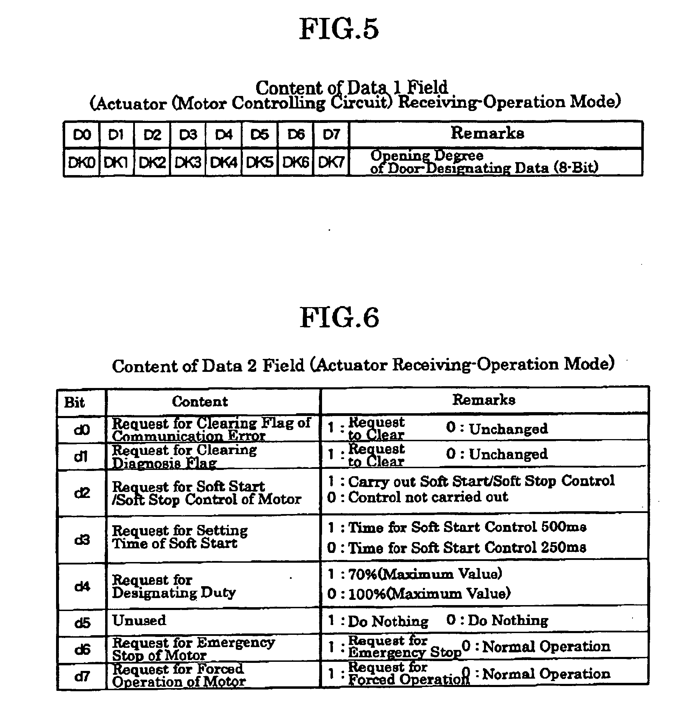

FIG. 5 is a diagram showing one example of content of the data 1 field in the receiving-operation mode. As shown in FIG. 5, the opening degree of door-designating data (DK0-DK7) are supplied in data having 8 bits.

FIG. 6 is a diagram showing one example of content of the data 2 field in the receiving-operation mode. The request for clearing flag of communication error is supplied by a lowest-order bit d0 in the data 2 field. When logic in the lowest-order bit d0 is "1", it is requested to clear the flag of communication error. When the logic in the lowest-order bit d0 is "0", a state of the communication error flag will not be changed. The request for clearing diagnosis flag is supplied by a second bit d1 in the data 2 field. When logic in the second bit d1 is "1", it is requested to clear the diagnosis flag. A state of the diagnosis flag will not be changed when the logic in the second bit d1 is "0".

The request for soft start/soft stop control and the request for setting time of soft start of the motor are supplied by third and fourth bits d2 and d3 in the data 2 field. Soft start/soft stop control will not be carried out when logic in the bits d2 and d3 are "0". When the logic in the bit d2 is "1", the soft start/soft stop control is requested. When the logic in the bit d3 is "1", the time for soft start control is set at 500ms. When the logic in the bit d3 is "0", the time for soft start control is set at 250ms.

A request for designating duty at the time of carrying out PWM control is supplied by a fifth bit d4 in the data 2 field. When logic in the bit d4 is "1", a maximum value of the duty is set at 70%. When the logic in the bit d4 is "0", the maximum value of the duty is set at 100%.

A sixth bit d6 in the data 2 field is not in use. The request for emergency stop of motor is supplied by a seventh bit d6 in the data 2 field. It is requested to stop the motor urgently when logic in the bit d6 is "1". When the logic in the bit d6 is "0", a normal operation is carried out. The request for forced operation of motor is supplied by a highest-order bit d7 in the data 2 field. It is requested to operate the motor forcibly when logic in the bit d7 is "1". When the logic in the bit d7 is "0", a normal operation is carried out.

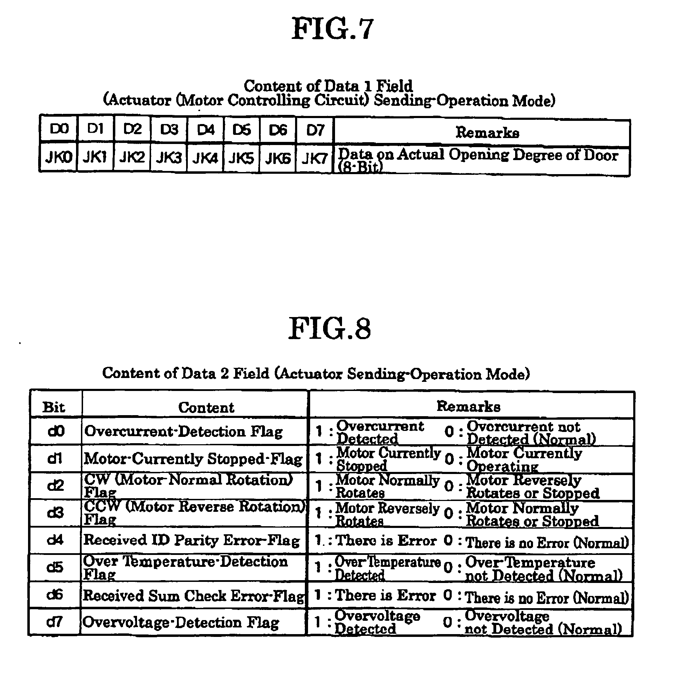

FIG. 7 is a diagram showing one example of content of the data 1 field in the sending-operation mode. As shown in FIG. 7, 8 bits of data JK0-JK7 corresponding to the actual opening degree of door are supplied to the main controller 100 as a host device.

FIG. 8 is a diagram showing one example of content of the data 2 field in the sending-operation mode. The overcurrent-detection flag is supplied to the main controller 100 by a lowest-order bit d0 in the data 2 field. The motor-currently stopped-flag is supplied by a second bit d1, the CW (motor-normal rotation) flag is supplied by a third bit d2, and the CCW (motor-reverse rotation) flag is supplied by a fourth bit d3 in the data 2 field to the main controller 100. The received ID parity error-flag is supplied by a fifth bit d4, the over-temperature-detection flag is supplied by a sixth bit d5, the received sum check error-flag is supplied by a seventh bit d6, and the overvoltage-detection flag is supplied by a highest-order bit d7 in the data 2 field to the main controller 100.

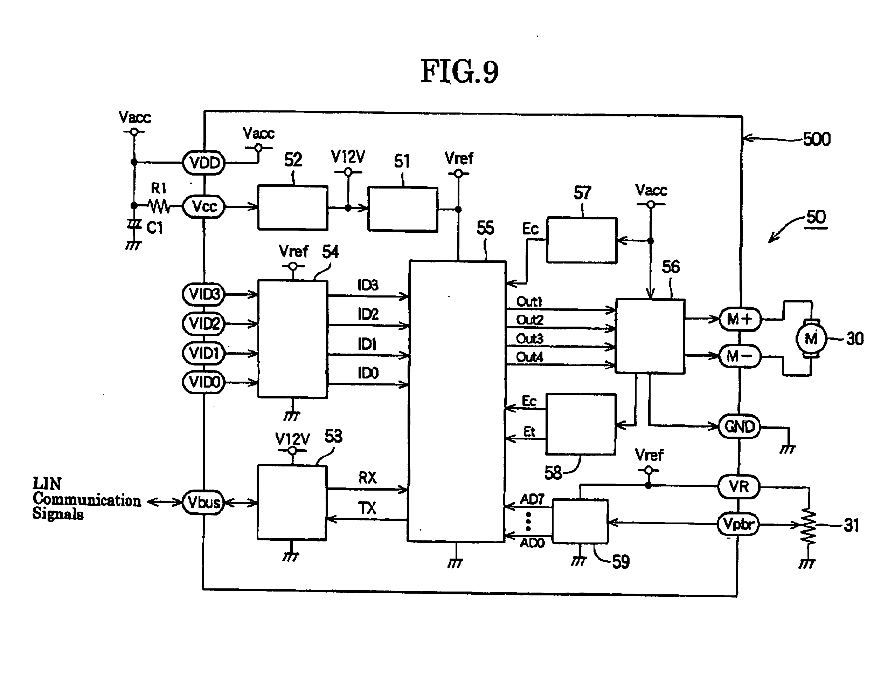

FIG. 9 is a block diagram showing the structure of the door actuator unit. Each of the door actuator units MIX, MODE and F/R comprises the motor controlling circuit 50 which includes a motor controlling IC 500 and its peripheral circuitry parts R1, C1. In addition, each of the door actuator units MIX, MODE and F/R further comprises the electric motor 30 driven by the motor controlling circuit 50, and the potentiometer 31 which is rotated in conjunction with the rotation of the actuator lever 30L of the electric motor type actuator 30A having the electric motor 30. The potentiometer 31 is for generating the voltage that corresponds to the present position of the door (actual opening degree) which is rotated by the actuator lever 30L.

The motor controlling IC 500 constructing the motor controlling circuit 50 is, for example but not limited to, the exclusively-used IC (custom IC) being exclusively for controlling a direct current motor adapted for LIN. According to one embodiment of the present invention, the motor controlling IC 500 is fabricated by using, for example but not limited to, a BiCDMOS process which is capable of forming a bipolar element, a C-MOS element and a D-MOS element on the same semiconductor chip.

The motor controlling IC 500 comprises a constant voltage-power source circuit 51, a built-in power source protection circuit 52, a LIN input/output circuit 53, an ID input circuit 54, a logic circuit portion 55, an H-bridge circuit portion 56, an overvoltage detecting circuit 57, an overcurrent/over-temperature detecting circuit 58, and an A/D converting portion 59. The constant voltage-power source circuit 51 receives supplying of electric power from a battery power source Vacc to generate stabilized power Vref which is, for example but not limited to, 5 volts. The built-in power source protection circuit 52 protects the constant voltage-power source circuit 51. The LIN input/output circuit 53 carries out input and output of LIN communication signals (serial communication signals). The ID input circuit 54 sets an identification code (ID code). The logic-circuit portion 55 carries out various processing and controlling such as communication processing and operational processing of the motor. The H-bridge circuit portion 56 supplies the electric power to the motor 30. The overvoltage detecting circuit 57 detects overvoltage of the battery power source Vacc. The overcurrent/over-temperature detecting circuit 58 detects an overcurrent of the current supplied to the motor and a rise in temperature that exceeds an allowable range (over-temperature) in respective power-switching elements (MOS-FETs) which are constructing the H-bridge circuit portion 56. The A/D converting portion 59 converts the outputted voltage (voltage which corresponds to opening degree of door) of the potentiometer 31 into digital data.

The battery power source Vacc is a power source supplied through the power source line from the main controller 100, and is the power source supplied via an ignition switch or an accessory switch or the like from the vehicle-mounted battery. VDD is a power source terminal of the battery power source Vacc for the H-bridge circuit portion 56. Vcc is a power source terminal of the battery power source Vacc in which the current thereof is limited by a current limiting resistor R1. C1 is a capacitor for stabilizing the power source. GND is a ground-power source terminal. V12V is a battery power source in which the current thereof is limited. The power source V12V is supplied to the LIN input/output circuit 53.

VID0-VID3 are input terminals for setting the identification code (ID code). According to one embodiment of the present invention, the identification code (ID code) is in 4-bit structure, and it is possible to set 16 different identification codes (in other words, addresses) at maximum. By connecting the ID input terminals VID0-VID3 to the ground, an "L" level (logical 0) can be set, whereas an "H" level (logical 1) can be set by an open state. Vbus is an input/output terminal of the serial communication signals (in concrete terms, the LIN communication signals), and more specifically, it is a connecting terminal of the data line (BUS). M⁺ and M⁻ are output terminals of the H-bridge circuit portion 56, and are connection terminals to be connected with the motor 30. VR is an output terminal of the stabilized power source Vref, wherein one end of the potentiometer 31 is connected thereto. Vpbr is an input terminal of the outputted voltage (voltage corresponding to opening degree of door) of the potentiometer 31.

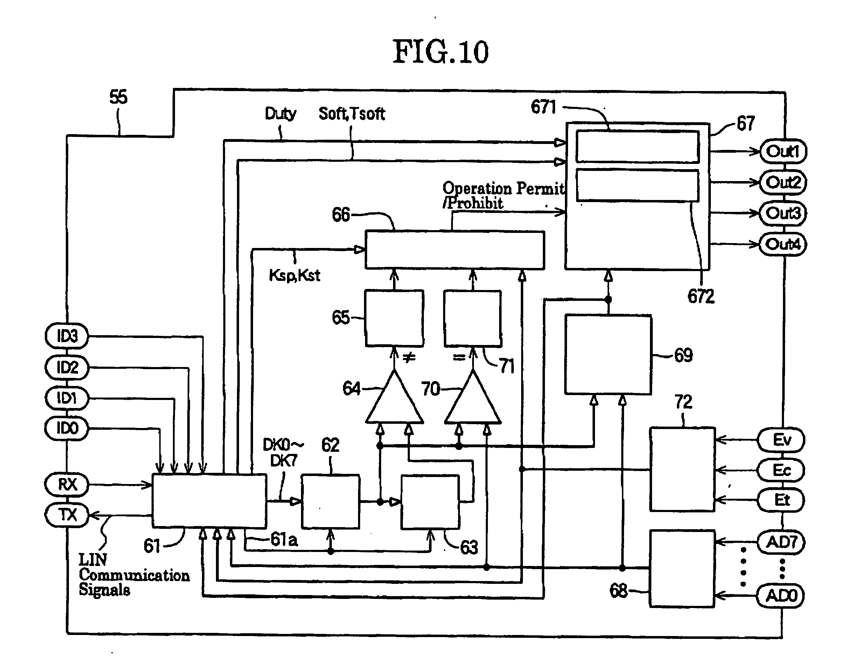

FIG. 10 is a diagram showing one concrete example of the logic-circuit portion included in the motor controlling IC constructing the motor controlling circuit. A LIN communication processing portion 61 decodes a reception-signal RX supplied from tho LIN input/output circuit 53, and temporarily stores the 8-bit data of each of the data 1 field, the data 2 field and the checksum field into, for example, a temporary resister included in the LIN communication processing portion 61, respectively, provided that a result of a parity check of the ID field is normal, the received ID code coincides with the own ID code, and the receiving-request is designated by the 2 bits in the ID field which are the ID4 and the ID5.

Subsequently, the LIN communication processing portion 61 carries out a sum check on each of the data which are stored temporarily. When there is no error in the sum check, the LIN communication processing portion 61 supplies the opening degree of door-designating data (target value-data) DR0-DK7 which are in 8-bit in the data 1 field to a new command data-latch circuit 62, and at the same time, outputs communication-established trigger signals 61a to latch the new command data-latch circuit 62 with the opening degree of door-designating data (target value-data). At this time, the prior opening degree of door-designating data (target value-data) stored in the new command data-latch circuit 62 is shifted to an old command data-latch circuit 63.

In a case where an error has occurred in the result of the parity check of the ID field, the LIN communication processing portion 61 sets the received ID parity error-flag in a position in a send-data resistor space in the LIN communication processing portion 61 at which the received ID parity error-flag is stored. Also, in a case where an error has occurred in a result of the sum chock, the LIN communication processing portion 61 sets the received sum check error-flag in the send-data resistor space in the LIN communication processing portion 61 at which the received sum check error-flag is stored.

Next, the LIN communication processing portion 61 decodes the content of the data 2 field to carry out a necessary process. As shown in FIG. 7, the request for clearing flag of communication error is supplied by the lowest-order bit d0 in the data 2 field. The LIN communication processing portion 61 clears the received ID parity error-flag and the received sum check error-flag, respectively, when the logic in the lowest-order bit d0 is "1", and does not change the state of the respective flags when the logic in the lowest-order bit d0 is "0".

The request for clearing diagnosis flag is supplied by the second bit d1 in the data 2 field. The LIN communication processing portion 61 clears all the overcurrent-detection flag, the over-temperature-detection flag and the overvoltage-detection flag when the logic in the second bit d1 is "1", and does not change the state of each of the flags when the logic in the second bit d1 is "0".

The request for soft start/soft stop control "Soft" and the request for setting time of soft start "Tsoft" of the motor which are designated in the bit d2 and the bit d3 in the data 2 field are supplied to an H-bridge driving processing portion (PWM controller) 67. Here, the soft start control stands for starting the operation of the motor softly by gradually increasing duty ratio of the PWM control at the time of the activation of the motor. Also, the time for soft start control is a time of changing the duty ratio from zero percent or a minimum duty value to 100 percent, at the time when carrying out the soft start. The soft stop control stands for stopping the motor softly by gradually decreasing the duty ratio of the PWM control, when deviation between the opening degree of door-designating data (target value-data) and the actual opening degree of door-data (present value data) after the filter processing becomes lower than a predetermined value. In the soft stop control, for example, the duty ratio is set based on the deviation between the opening degree of door-designating data (target value-data) and the actual opening degree of door-data (present value data) to which filter processing is applied.

The LIN communication processing portion 61 supplies the request for designating duty "Duty" designated by the bit d4 in the data 2 field to the H-bridge driving processing portion (PWM controller) 67. When the logic in the bit d4 is "1", the maximum value of the duty is limited to 70% for example.

The request for emergency stop of motor is supplied by the seventh bit d6 in the data 2 field. When the logic in the seventh bit d6 is "1", power application to the motor is shut off forcibly. When the logic in the seventh bit d6 is "0", a state that the power application to the motor has been forcibly shut off is cancelled, and the state becomes a state wherein the power application to the motor is possible (normal operating state). The LIN communication processing portion 61 supplies the request for emergency stop of motor "Ksp" to an operation permitting/prohibiting signals-processing portion 66. In a case of rotating the motor again after having stopped the motor urgently, the subsequent request for forced operation of motor is used. In one embodiment, the opening degree of door-designating data different from that used before may be given in the case of rotating the motor again after the motor is stopped urgently.

The request for forced operation of motor is supplied by the highest-order bit d7 in the data 2 field. When the logic in the highest-order bit is "1", the power application to the motor is started forcibly. A state becomes a normal operating state when the logic in the highest-order bit is "0". The LIN communication processing portion 61 supplies the request for forced operation of motor "Kst" to the operation permitting/prohibiting signals-processing portion 66.

A first comparing circuit 64 compares the new opening degree of door-designating data (target value-data) with the old opening degree of door-designating data, and supplies a result of the comparison (discordance output) to an operation permitting trigger signal-generating portion 65. The operation permitting trigger signal-generating portion 65 generates operation permitting trigger signals and supplies them to the operation permitting/prohibiting signals-processing portion 66 when the new and the old opening degree of door-designating data are different from each other. The operation permitting/prohibiting signals-processing portion 66 supplies operation permitting signals to the H-bridge driving processing portion 67 when the operation permitting trigger signals are supplied thereto.

The output of the potentiometer 31 for detecting the opening degree of door is converted into actual opening degree of door-data (present value data) AD0-AD7 in 8 bits in every A/D conversion cycle previously set by the A/D converting circuit 59 shown in FIG. 9. A filter processing portion 68 shown in FIG. 10 outputs a result of having carried out a process such as calculating an average value of the actual opening degree of door-data (present value data) AD0-AD7 which are in a predetermined number of pieces continuing on a time series, as actual opening degree of door-data (present value data) to which the filter processing is applied.

A CW, CCW, HOLD command signals-generating portion 69 compares the opening degree of door-designating data (target value-data) with the actual opening degree of door-data (present value data) applied with the filter processing, and decides a rotational direction of the motor 30 based on a deviation between them. Thereafter, the CW, CCW, HOLD command signals-generating portion 69 generates and outputs rotational direction-command signals (CW, CCW) for commanding whether to drive the motor 30 in a normal direction (CW: clockwise) to drive the door in an "open" direction, or to drive the motor 30 in a reverse direction (CCW: counterclockwise) to drive the door in a "close" direction. In a case where the opening degree of door-designating data (target value-data) and the actual opening degree of door-data (present value data) applied with the filter processing substantially coincide with each other, the CW, CCW, HOLD command signals-generating portion 69 generates and outputs HOLD signals for commanding holding of the present position of the door to stop the driving of the motor 30, so as to avoid generation of a hunting phenomenon.

The H-bridge driving processing portion 67 generates and outputs driving signals Out1-Out4 for each of the power-switching elements (for example, MOS-FETs) constructing respective arms of the H-bridge circuit portion 56, based on the rotational direction-command signals (CW, CCW). Accordingly, the electric power is supplied to the motor 30 from the H-bridge circuit portion 56 shown in FIG. 9, thereby making the motor 30 driven.

When a soft start/soft stop process has been set based on the request for soft start/soft stop control "Soft" and the time for soft start control "Tsoft", the H-bridge driving processing portion 67 carries out the soft start control wherein the electric power supplied to the electric motor 30 is gradually increased by the PWM control at the time of activation of the electric motor 30, to reduce a noise generated when the motor activates. Also, the H-bridge driving processing portion carries out the soft stop control wherein the electric power supplied to the motor 30 is gradually decreased by the PWM control at the time of stopping of the electric motor 30, to reduce the noise generated when the motor stops.

A second comparing circuit 70 compares the opening degree of door-designating data (target value-data) with the actual opening degree of door-data (present value data) applied with the filter processing, and supplies a result of the comparison (accordance output) to an operation prohibiting signal-generating portion 71. The operation prohibiting signal-generating portion 71 generates and outputs operation prohibiting signals when the present opening degree of the door coincides with the target value. The operation prohibiting signals are supplied to the operation permitting/prohibiting signals-processing portion 66. The operation permitting/prohibiting signals-processing portion 66 supplies a command for prohibiting operation to the H-bridge driving processing portion 67 to prohibit the driving of the electric motor 30.

When one of overvoltage-detection signals "Ec" from the overvoltage detecting circuit 57, overcurrent-detection signals "Ec" and over-temperature-detection signals "Et" from the overcurrent/over-temperature detecting circuit 58 is supplied, an overcurrent, over-temperature, overvoltage processing portion 72 sets a flag which corresponds to the abnormality with regard to respective signals, and supplies information representing generation of the abnormality to the operation permitting/prohibiting signals-processing portion 66. The operation permitting/prohibiting signals-processing portion 66 supplies the command for prohibiting operation to the H-bridge driving processing portion 67 when the information representing the generation of the abnormality is supplied, to prohibit the driving of the motor 30.

In the case where the result of the parity check of the ID field is normal, the received ID code coincides with the own ID code, and the sending-request is designated by the 2 bits of the ID4 and the ID5 in the ID field, the LIN communication processing portion 61 sets the actual opening degree of door-data (present value data) applied with the filter processing which are in 8 bits as shown in FIG. 7 as the data to be sent in the data 1 field, and sets the one shown in FIG. 8 as the data to be sent in the data 2 field.

More specifically, the LIN communication processing portion 61 sets the overcurrent-detection flag in the lowest-order bit d0 of the data 2 field, the motor-currently stopped-flag in the second bit d1, the CW flag which represents that the direction of the motor rotates is the normal direction (CW) in the third bit d2, the CCW flag which represents that the direction of the motor rotates is the reverse direction (CCW) in the fourth bit d3, the received ID parity error-flag in the fifth bit d4, the over-temperature-detection flag in the sixth bit d5, the received sum check error-flag in the seventh bit d6, and the overvoltage-detection flag in the highest-order bit d7, respectively.

Thereafter, the LIN communication processing portion 61 obtains inverted data which is a result wherein the data to be sent in the data 1 field and the data to be sent in the data 2 field are added and a result of the addition thereof is further added with carry-data generated by that addition, and defines the obtained data as checksum data to be sent in the checksum field.

Then, the LIN communication processing portion 61 sequentially sends the data in the data 1 field, the data 2 field and the checksum field promptly after the point of completion of the ID field (for example, during the 2-bit period). Accordingly, the actual opening degree of door-data (present position data), the information on the operational states of the motor such as the rotational direction of the motor or whether or not the motor is stopped, the information on detection of abnormality of the overcurrent, the overvoltage or the over-temperature, and the information representing that the error has occurred at the time of the data-receiving, are supplied to the main controller 100.

Therefore, the main controller 100 is capable of making the diagnosis of the operation of the motor controlling circuit 50 in detail. The main controller 100 is also possible to avoid damages in the motor controlling circuit 50 and the electric motor type actuator 30A by estimating overload in the motor controlling circuit 50 and giving a command to stop an operation of a motor controlling device, for example.

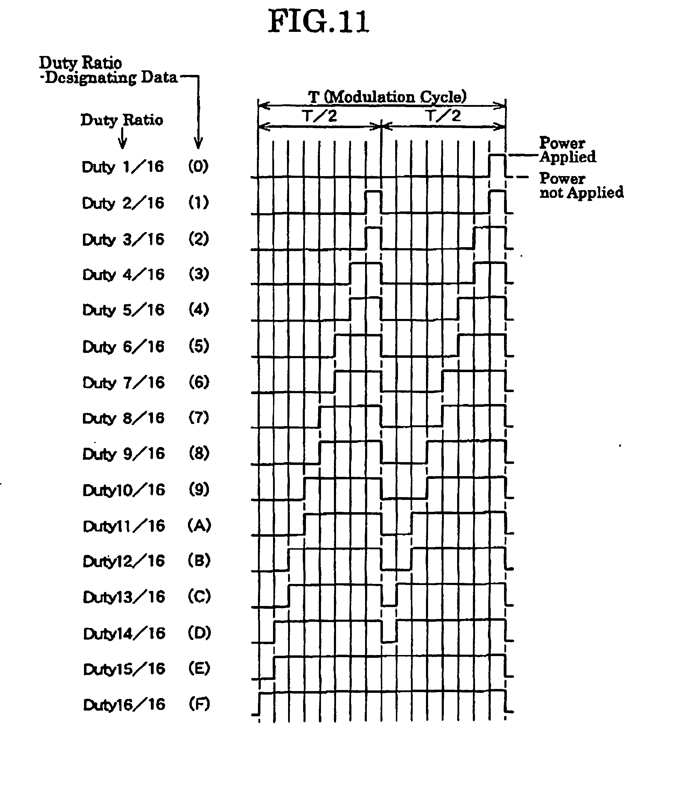

FIG. 11 is a diagram showing an example of switching the electric power supplied to the electric motor in 16 steps by the PWM control. In the present embodiment, the duty ratio (Duty) is divided into 16 steps from 1/16 to 16/16 for example, and each of the duty ratios is designated by the duty ratio-designating data represented in the hexadecimal form (more specifically, the 4-bit duty ratio-designating data) shown in brackets in FIG. 11. Also, one modulation cycle T of the PWM control is divided into 2 sections (T/2) of a former half and a latter half, so that sections for applying the power to the electric motor 30 are increased alternately in the former half and the latter half. Accordingly, a power-applied period to the electric motor 30 becomes T/2 from the duty ratio (Duty) 2/16 and above. Therefore, it is possible to reduce torque fluctuations (pulsation) in the output of the motor.

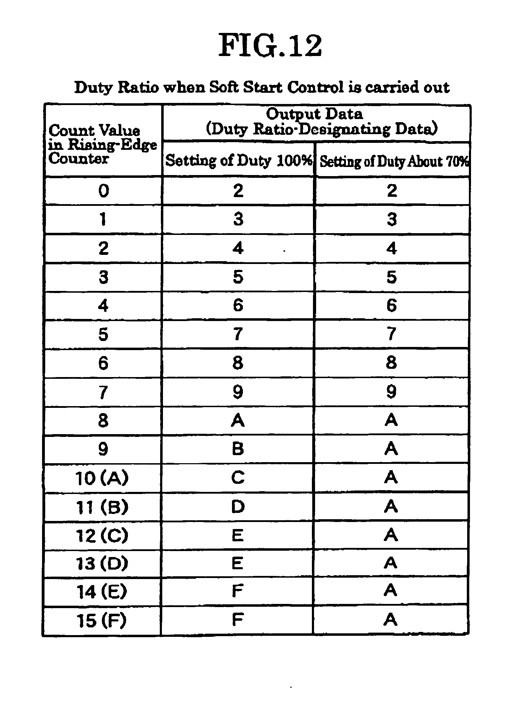

FIG. 12 is a diagram showing one example of a PWM-data map for the soft start at the time of the activation of the motor. The H-bridge driving processing portion (PWM controller) 67 shown in FIG. 10 comprises a PWM-data map for soft start 671. As shown in FIG. 12, a map for showing correspondence between a count value in a rising-edge counter and the duty ratio-designating data is previously registered in the PWM-data map for soft start 671. The rising-edge counter is included in the H-bridgo driving processing portion (PWM controller) 67, illustration of which is omitted.

In the PWM-data map for soft start 671, the duty ratio-designating data of a case where the duty ratio is 100 percent is stored. When the maximum value of the duty ratio is set, for example, approximately 70 percent (Duty 11/16, "A" shown by hexadecimal form), the duty ratio is increased based on the PWM-data map for soft start 671, and when the duty ratio reaches up to approximately 70 percent (Duty 11/16, "A" shown by hexadecimal form) and from then on, the "approximately 70 percent" (Duty 11/16, "A" shown by hexadecimal form) as the maximum value (limit value) of the duty ratio is maintained. Accordingly, it is possible to carry out the soft start control with respect to various duty ratios with one kind of the PWM-data map for soft start 671. Turning to FIG. 12, references within the brackets in "count value in rising-edge counter" are shown by the hexadecimal form. "Output data (duty ratio-designating data)" are also shown by the hexadecimal form.

When activating the motor, the H-bridge driving processing portion 67 pluses (performs increment) the counter value of the rising-edge counter (not shown) by 1 (one) in every cycle which is decided based on the time for soft start control designated by the bit d3 in the data 2 field as shown in FIG. 6. Thereafter, the H-bridge driving processing portion reads out a duty value of the duty ratio-designating data corresponding to the plused (incremented) count value from the PWM-data map for soft start 671, generates the driving signals Out1-Out4 which are modulated by PWM modulation based on the read out duty value and supplies the generated driving signals Out1-Out4 to the H-bridge circuit portion 56, thereby supplying the electric power to the electric motor 30 through the power-switching elements (for example, MOS-FETs) constructing each of the arms within the H-bridge circuit portion 56.

In a case where a difference between the opening degree of door-designating value (target value) (8-bit data) and the actual opening degree of door (present value) (8-bit) is over 16 (target value - present value ≧ 16) at the time when the soft start control is finished, the H-bridge driving processing portion 67 carries out the supplying of the electric power to the electric motor 30 with the duty ratio designated by the main controller 100. In other words, the H-bridge driving processing portion carries out the supplying of the electric power to the electric motor 30 continuously when the maximum value of the duty is set at 100% by the bit d4 shown in FIG. 7. When the "duty approximately 70%" is set, the electric motor is driven with the PWM control wherein the duty is approximately 70%. Accordingly, the electric power supplied to the electric motor 30 is limited to approximately 70% of rated electric power (electric power at the time of the continuous power application). Therefore, number of rotations of the electric motor becomes lower than rated number of rotation, and thus the frequency of the noise and the noise level are reduced.

The H-bridge driving processing portion 67 carries out the process of the soft stop when the difference between the opening degree of door-designating value (target value) (8-bit data) and the actual opening degree of door (present value) (8-bit) becomes less than 15 (target value - present value ≦ 15). The process of the soft stop is executed only when the soft start/soft stop control of the motor is set to be carried out.

When the soft start/soft stop control is set to be not carried out, the H-bridge driving processing portion 67 carries out normal servocontrol such that the difference between the opening degree of door-designating value (target value) (8-bit data) and the actual opening degree of door (present value) (8-bit) becomes zero.

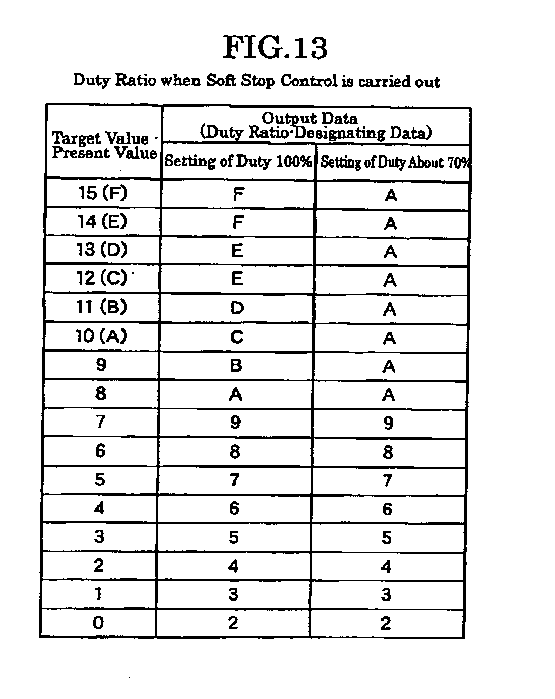

FIG. 13 is a diagram showing one example of a PWM-data map for the soft stop. The H-bridge driving processing portion (PWM controlling portion) 67 shown in FIG. 10 comprises a PWM-data map for soft stop 672. In the PWM-data map for soft stop 672, duty ratio-setting data is previously registered corresponding to an absolute value which is a difference between the target value and the present value ( | target value - present value | ). Only the duty ratio-designating data in the case where the duty ratio is 100 percent is stored in the PWM-data map for soft stop (PWM data storing portion) 672.

Accordingly, in a case in which the maximum value of the duty ratio is set at approximately 70 percent, the duty ratio of approximately 70 percent is used provided that the duty ratio-designating data in the case where the duty ratio is 100 percent (more specifically, the duty ratio-designating data read out from the PWM-data map for soft stop 672) is larger in value than the duty ratio of approximately 70 percent. In FIG. 13, references within brackets in a column of the difference between the target value and the present value (l target value - present value | ) are shown by the hexadecimal form. Also, "output data (duty ratio-designating data)" are shown by the hexadecimal form.

The H-bridge driving processing portion 67 reads out the duty ratio-setting data corresponding to the absolute value which is the difference between the target value and the present value ( | target value - present value | ) from the PWM-data map 672, generates the driving signals Out1-Out4 which are modulated by the PWM control based on a read-out duty value, and supplies the generated driving signals Out1-Out4 to the H-bridge circuit portion 56, thereby supplying the electric power to the electric motor 30 through the power-switching elements (for example, MOS-FETs) constructing each of the arms within the H-bridge circuit portion 56. Since the electric power supplied to the electric motor 30 is made smaller as the difference between the target value and the present value becomes smaller, it is possible to stop the door at the position corresponding to the target value or at the position near thereto with high precision. Also, it is possible to reduce the noise generated at the time when the motor stops.

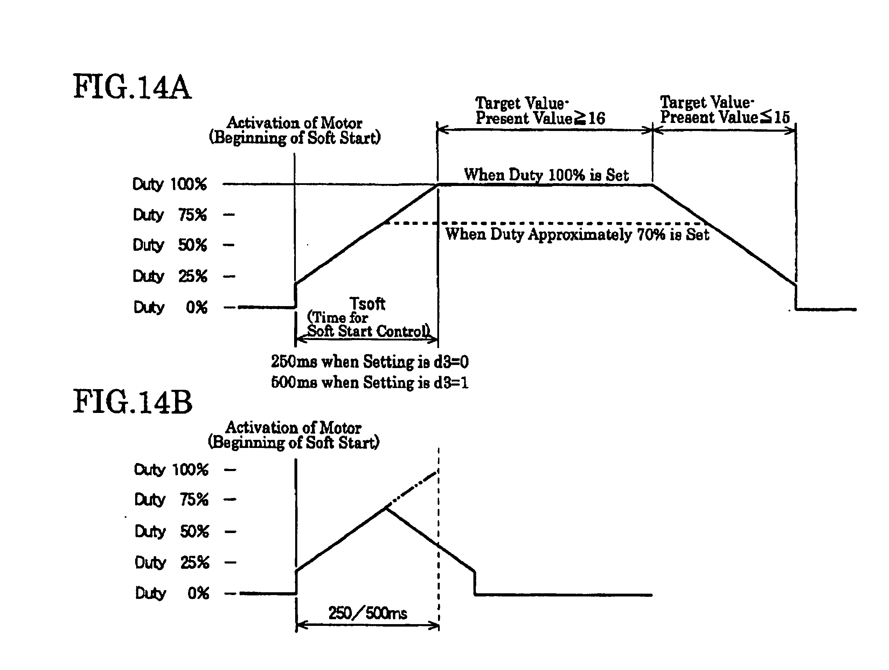

FIGS. 14A and 14B are graphs showing characteristics of changes in the duty ratio from the activation of the motor to the stopping of the motor when the soft start/soft stop control is carried out. Since the duty ratio and the electric power supplied to the electric motor are in a proportionality relation, the graphs shown in FIGS. 14A and 14B represent the characteristics of changes in the electric power supplied to the electric motor. More specifically, FIG. 14A shows the characteristic of change of the duty ratio from the activation of the motor to the stopping of the motor, whereas FIG. 14B shows the characteristic of change of the duty ratio in a case where the control of the motor is shifted to carry out the soft stop control from the middle of the performance of the soft start control, due to the fact that the absolute value which is the difference between the opening degree of door-designating value (target value) and the actual opening degree of the door (present value) becomes lower than a predetermined value while the soft start control in the activation of the motor is carried out.

As shown in FIG. 14A, when the opening degree of door-designating value (target value) is set, the activation of the motor (soft start control) is carried out on the basis of the duty ratio at the time of carrying out the soft start control (PWM-data map for soft start 671) as shown in FIG. 12. The supplying of the electric power to the electric motor 30 is continuously carried out with the set duty ratio during when the difference between the opening degree of door-designating value (target value) (8-bit data) and the actual opening degree of door (present value) (8-bit) is over 16 (target value - present value ≧ 16). For example, when the duty ratio of 100% (Duty 16/16) is set, the electric power is supplied to the electric motor 30 with the duty ratio of 100% as shown by a solid line in FIG. 14A (in other words, the power supplying to the motor is not limited). When the duty ratio of approximately 70% (Duty 11/16) is set, the power supplying to the electric motor 30 is limited as shown by a dotted line in FIG. 14A, wherein the duty ratio of approximately 70% is an upper limit.

The soft stop control of the motor is carried out based on the duty ratio at the time of carrying out the soft stop control (PWM-data map for soft stop 672) as shown in FIG. 13 from the point when the absolute value which is the difference between the opening degree of door-designating value (target value) (8-bit data) and the actual opening degree of door (present value) (8-bit) becomes less than 15 ( | target value - present value | ≦ 15), and thereby the motor is stopped.

As shown in FIG. 14B, when the absolute value as the difference between the opening degree of door-designating value (target value) (8-bit data) and the actual opening degree of door (present value) (8-bit) becomes less than 15 ( | target value - present value | ≦ 15) while the soft start control is carried out, the control of the motor is shifted to the soft stop control at that point to stop the motor by the soft stop control.

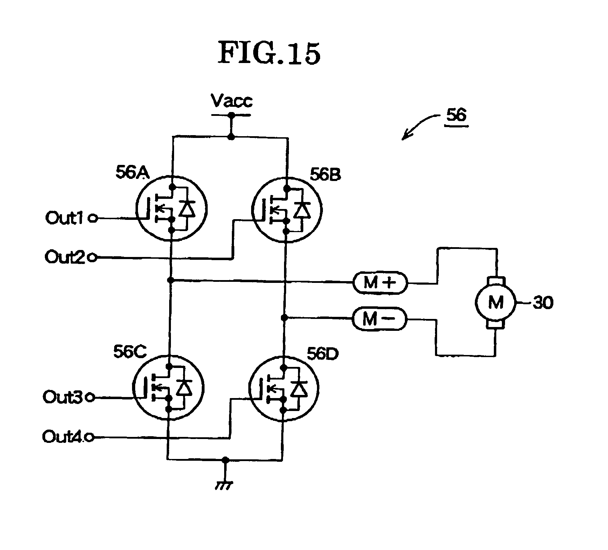

FIG. 15 is a diagram showing a structure of the H-bridge circuit portion according to the embodiment of the present invention. In the present embodiment, the H-bridge circuit portion 56 is structured by four N channel-MOS type transistors (hereinafter, simply referred to as transistors) 56A-56D for example. Gates of each of the transistors 56A-56D shown in FIG. 15 are respectively driven on the basis of the four PWM signal outputs Out1-Out4 generated by the H-bridge driving processing portion (PWM controller) 67 shown in FIG. 10.

When both the transistor 56A and the transistor 56D are controlled to be in a conducting state, the battery power source Vacc is supplied to the terminal M+ which is one of the terminals of a coil of the electric motor 30, while the ground-power source is supplied to the terminal M- which is the other of the terminals of the coil of the electric motor 30. Thereby, the electric motor 30 is driven normally. When both the transistor 56B and the transistor 56C are controlled to be in the conducting state, the electric motor 30 is driven reversely.

In the present embodiment, the PWM control for the motor to be rotated normally is carried out by controlling the transistor 56D, which is a lower arm, to be in the conducting state and controlling a conducting period of the transistor 56A, which is an upper arm. On the other hand, the PWM control for the motor to be rotated reversely is carried out by controlling the lower arm transistor 56C to be in the conducting state, and controlling the conducting period of the upper arm transistor 56B. In the present embodiment, each of the lower arm transistors 56C and 56D are controlled to be in the conducting state and both ends of the coil of the electric motor 30 are shunted through the respective transistors 56C and 56D, to cause a regeneration brake.

As shown in FIGS. 1 and 2, according to the air-conditioning device for the automobile (car air-conditioner) of the embodiment of the present invention, the main controller 100 as a master apparatus and each of the actuator units as slave devices carry out the serial data communication through the data line (BUS) as the LIN bus based on the LIN protocol, to control the opening degree of each of the doors and monitor the operational states of each of the door actuator units and so on.

The main controller 100 does not transmit the communication data in the case where the battery power source voltage is out of the predetermined range of voltage by utilizing the battery power source voltage monitoring means 130 and the communication permitting means 111. Therefore, it is possible to obviate generation of the communication error and the abnormal operation of slaves.

Although the invention has been described in its preferred form with a certain degree of particularity, it should be noted that the present invention is not limited by the embodiments described in the foregoing, wherein the in-vehicle device control system according to the present invention is applied to the air-conditioning device for the automobile (car air-conditioner). For example, the present invention is also applicable to a power window device or the like.

In addition, although the embodiment of the present invention explained the LIN bus of car air-conditioner control application as a concrete example of an in-vehicle network and the main controller 100 for controlling an entire operation of the car air-conditioner as the master apparatus of the in-vehicle network, the present invention is also applicable to various kinds of in-vehicle networks employing a master/slave structure (for example but not limited to, power window control application, door control application and seat control application and so on).

It will be apparent to those skilled in the art that various modifications and variations can be made to the structure of the present invention without departing from the scope of the invention. In view of the foregoing, it is intended that the present invention covers modifications and variations of this invention provided they fall within the scope of the following claims and their equivalents.

## Claims

1. An in-vehicle device control system, comprising:
a main controller (100); and
at least one actuator unit (F/R, MIX, MODE),
said main controller (100) being adapted to carry out bidirectional serial data communication with said at least one actuator unit (F/R, MIX, MODE) through a bus (BUS) which is pulled up to a battery power source (VB), said serial data communication being carried out to operate said at least one actuator unit (F/R, MIX, MODE) by supplying an operation command from said main controller (100) to said at least one actuator unit (F/R, MIX, MODE) and to supply various information from said at least one actuator unit (F/R, MIX, MODE) to said main controller (100), said main controller (100) comprises a voltage monitor (130) for monitoring a voltage of said battery power source (VB), wherein
said main controller (100) comprises a communication permitting unit (111) for permitting transmission of communication data between said main controller (100) and said at least one actuator unit (F/R, MIX, MODE) when the voltage of said battery power source (VB) is in a predetermined range of voltage, **characterized in that** said communication permitting unit (111) further prohibits the transmission of data communication when the battery power source (VB) is out of the predetermined range of voltage.

2. The in-vehicle device control system according to claim 1, **characterized in that** said serial data communication between said main controller (100) and said at least one actuator unit (F/R, MIX, MODE) utilizes a local interconnect network.

3. The in-vehicle device control system according to claim 1 or 2, **characterized in that** said main controller (100) controls entire operation of an air-conditioning device for an automobile, and said at least one actuator unit (F/R, MIX, MODE) comprises a plurality of actuator units (F/R, MIX, MODE) adapted to rotate doors provided in said air-conditioning device for the automobile, respectively.

4. A master apparatus (100) of an in-vehicle network configured to carry out serial data communication with a slave device (F/R, MIX, MODE) through a bus (BUS) which is pulled up to a battery power source (VB) via a pull-up resistor (R), said master apparatus (100) comprises a voltage monitor (130) for monitoring a voltage of said battery power source (VB), wherein said master apparatus (100) comprises a communication permitting unit (111) for permitting transmission of communication data between said master apparatus (100) and said slave device (F/R, MIX, MODE) when the voltage of said battery power source (VB) is in a predetermined range of voltage **characterized in that** said a communication permitting unit (111) further prohibits the transmission of data communication when the battery power source voltage (VB) is out of the predetermined range of voltage.

5. The master apparatus (100) of the in-vehicle network according to claim 4, **characterized in that** said serial data communication between said master apparatus (100) and said slave device (F/R, MIX, MODE) utilizes a local interconnect network.

6. The master apparatus (100) of the in-vehicle network according to claim 4 or 5, **characterized in that** said master apparatus (100) controls entire operation of an air-conditioning device for an automobile, and said slave device (F/R, MIX, MODE) rotates a door provided in said air-conditioning device for the automobile.

## Patentansprüche

1. Vorrichtungssteuerungssystem in einem Fahrzeug, aufweisend:
eine Hauptsteuerungseinrichtung (100); und
zumindest eine Betätigereinheit (F/R, MIX, MODUS),
wobei die Hauptsteuerungseinrichtung (100) vorgesehen ist, eine serielle Datenübertragung in zwei Richtungen mit zumindest einer Betätigereinheit (F/R, MIX, MODUS) durch einen Bus (BUS) auszuführen, der von einer Batterieenergiequelle (VB) versorgt wird, wobei die serielle Datenübertragung ausgeführt wird, um die zumindest eine Betätigereinheit (F/R, MIX, MODUS) durch Zuführung eines Arbeitsbefehls von der Hauptsteuerungseinrichtung (100) zu der zumindest einen Betätigereinheit (F/R, MIX, MODUS) zu betätigen, und um verschiedene Informationen von der zumindest einen Betätigereinheit (F/R, MIX, MODUS) zu der Hauptsteuerungseinrichtung (100) zuzuführen, wobei die Hauptsteuerungseinrich-, tung (100) aufweist einen Spannungsmonitor (130) zum Überwachen einer Spannung der Batterieenergiequelle (VB), wobei die Hauptsteuerungseinrichtung (100) eine Verbindungs- Gestattungseinheit (111) aufweist, um eine Übertragung von Verbindungsdaten zwischen der Hauptsteuerungseinrichtung (100) und der zumindest einen Betätigereinheit (F/R, MIX, MODUS) zu gestatten, wenn die Spannung der Batterieenergiequelle (VB) in einem vorbestimmten Spannungsbereich ist,
**dadurch gekennzeichnet, dass** die Verbindungs- Gestattungseinheit (111) außerdem die Übertragung der Datenverbindung verbietet, wenn die Batterieenergiequelle (VB) außerhalb des vorbestimmten Spannungsbereichs ist.

2. Vorrichtungssteuerungssystem in einem Fahrzeug nach Anspruch 1, **dadurch gekennzeichnet, dass** die serielle Datenübertragung zwischen der Hauptsteuerungseinrichtung (100) und der zumindest einen Betätigereinheit (F/R, MIX, MODUS) ein lokal verknüpftes Netzwerk verwendet.

3. Vorrichtungssteuerungssystem in einem Fahrzeug nach Anspruch 1 oder 2, **dadurch gekennzeichnet, dass** die Hauptsteuerungseinrichtung (100) den gesamten Betrieb einer Klimatisierungsvorrichtung für ein Kraftfahrzeug steuert und zumindest eine Betätigereinheit (F/R, MIX, MODUS) aufweist eine Mehrzahl von Betätigereinheiten (F/R, MIX, MODUS), vorgesehen um Klappen zu drehen, die jeweils in der Klimatisierungsvorrichtung für das Kraftfahrzeug vorgesehen sind.

4. Hauptvorrichtung (100) eines Netzwerkes im Fahrzeug, konfiguriert um eine serielle Datenübertragung mit einer Untervorrichtung (F/R, MIX, MODUS) durch einen Bus (BUS) auszuführen, der von einer Batterieenergiequelle (VB) über einen Widerstand (R) versorgt wird, wobei die Hauptvorrichtung einen Spannungsmonitor (130) zum Überwachen einer Spannung der Batterieenergiequelle (VB) aufweist, wobei die Hauptvorrichtung (100) eine Verbindungs- Gestattungseinheit (111) aufweist, um die Übertragung der Übertragungsdaten zwischen der Hauptvorrichtung (100) und der Untervorrichtung (F/R, MIX, MODUS) zu gestatten, wenn die Spannung der Batterieenergiequelle (VB) in einem vorbestimmten Spannungsbereich ist, **dadurch gekennzeichnet, dass** die Verbindungs- Gestattungseinheit (111) außerdem die Übertragung der Datenverbindung verbietet, wenn die Batterieenergiequelle (VB) außerhalb des vorbestimmten Spannungsbereichs ist.

5. Hauptvorrichtung (100) des Netzwerkes im Fahrzeug nach Anspruch 4, **dadurch gekennzeichnet, dass** die serielle Datenübertragung zwischen der Hauptvorrichtung (100) und der Untervorrichtung (F/R, MIX, MODUS) ein lokal verknüpftes Netzwerk verwendet.

6. Hauptvorrichtung (100) des Netzwerkes im Fahrzeug nach Anspruch 4 oder 5, **dadurch gekennzeichnet, dass** die Hauptvorrichtung (100) den gesamten Betrieb einer Klimatisierungsvorrichtung für ein Kraftfahrzeug steuert und die Untervorrichtung (F/R, MIX, MODUS) eine Klappe dreht, die sich in der Klimatisierungsvorrichtung für das Kraftfahrzeug vorgesehen ist.

## Revendications

1. Système de commande de dispositif embarqué à bord d'un véhicule, comprenant:
un contrôleur principal (100) ; et
au moins une unité d'actionnement (F/R, MIX, MODE),
ledit contrôleur principal (100) étant adapté pour exécuter une communication bidirectionnelle de données en série avec ladite au moins une unité d'actionnement (F/R, MIX, MODE) par le biais d'un bus (BUS) qui est rappelé vers le niveau haut vers une source d'alimentation par batterie (VB), ladite communication de données en série étant exécutée afin de faire fonctionner ladite au moins une unité d'actionnement (F/R, MIX, MODE),) en envoyant une instruction de commande de fonctionnement depuis ledit contrôleur principal (100) vers ladite au moins une unité d'actionnement (F/R, MIX, MODE), et pour envoyer diverses informations depuis ladite au moins une unité d'actionnement (F/R, MIX, MODE) vers ledit contrôleur principal (100), ledit contrôleur principal (100) comprend un relais à seuil de tension (130) pour surveiller une tension de ladite source d'alimentation par batterie (VB), dans lequel ledit contrôleur principal (100) comprend une unité d'autorisation de communication (111) pour autoriser une transmission de données de communication entre ledit contrôleur principal (100) et ladite au moins une unité d'actionnement (F/R, MIX, MODE) quand la tension de ladite source d'alimentation par batterie (VB) se situe dans une plage de tension prédéterminée, **caractérisé en ce que** ladite unité d'autorisation de communication (111) empêche par ailleurs la transmission de données de communication quand la tension de la source d'alimentation par batterie (VB) se situe à l'extérieur de la plage de tension prédéterminée.

2. Système de commande de dispositif embarqué à bord d'un véhicule selon la revendication 1, **caractérisé en ce que** ladite communication de données en série entre ledit contrôleur principal (100) et ladite au moins une unité d'actionnement (F/R, MIX, MODE) utilise un réseau d'interconnexion local.

3. Système de commande de dispositif embarqué à bord d'un véhicule selon la revendication 1 ou 2, **caractérisé en ce que** ledit contrôleur principal (100) contrôle le fonctionnement d'un dispositif de climatisation d'un véhicule automobile, dans son ensemble, et ladite au moins une unité d'actionnement (F/R, MIX, MODE) comprend une pluralité d'unités d'actionnement (F/R, MIX, MODE) adaptées pour faire tourner des portes dans ledit dispositif de climatisation du véhicule automobile, respectivement.

4. Dispositif maître (100) d'un réseau à bord d'un véhicule configuré pour exécuter une communication de données en série avec un dispositif esclave (F/R, MIX, MODE) par le biais d'un bus (BUS) qui est rappelé vers le niveau haut vers une source d'alimentation par batterie (VB) par le biais d'une résistance de rappel vers le niveau haut (R), ledit dispositif maître (100) comprend un relais à seuil de tension (130) pour surveiller une tension de ladite source d'alimentation par batterie (VB), dans lequel ledit dispositif maître (100) comprend une unité d'autorisation de communication (111) pour autoriser une transmission de données de communication entre ledit dispositif maître (100) et ledit dispositif esclave (F/R, MIX, MODE) quand la tension de ladite source d'alimentation par batterie (VB) se situe dans une plage de tension prédéterminée, **caractérisé en ce que** ladite unité d'autorisation de communication (111) empêche par ailleurs la transmission de données de communication quand la tension de la source d'alimentation par batterie (VB) se situe à l'extérieur de la plage de tension prédéterminée.

5. Dispositif maître (100) du réseau à bord d'un véhicule selon la revendication 4, **caractérisé en ce que** ladite communication de données en série entre ledit dispositif maître (100) et ledit dispositif esclave (F/R, MIX, MODE) utilise un réseau d'interconnexion local.

6. Dispositif maître (100) du réseau à bord d'un véhicule selon la revendication 4 ou 5, **caractérisé en ce que** ledit dispositif maître (100) contrôle le fonctionnement d'un dispositif de climatisation d'un véhicule automobile, dans son ensemble, et ledit dispositif esclave (F/R, MIX, MODE) fait tourner une porte prévue dans ledit dispositif de climatisation du véhicule automobile.
